# EUROPEAN PATENT SPECIFICATION

(11) **EP 0 587 891 B1**
(45) Date of publication and mention of the grant of the patent: **06.05.1998**
(21) Application number: 92911161.5
(22) Date of filing: 05.06.1992
(51) Int. Cl.: E04H 9/02, E04B 1/98

(54) **VIBRATION CONTROL DEVICE FOR STRUCTURE**
SCHWINGUNGSKONTROLLVORRICHTUNG FÜR BAUTEN
DISPOSITIF D'AMORTISSEMENT DES VIBRATIONS POUR STRUCTURE

(30) Priority: 07.06.1991 JP 136468/91
(43) Date of publication of application: 23.03.1994
(73) Proprietor: KAJIMA CORPORATION, Tokyo 107 (JP)
(72) Inventor: NISHIMURA, Isao, c/o Kajima Corporation, Tokyo 107 (JP); SAKAMOTO, Mitsuo, c/o Kajima Corporation, Tokyo 107 (JP)
(74) Representative: Godwin, Edgar James
(86) International application number: PCT/JP92/00729
(87) International publication number: WO 92/21841

(56) References cited:
- JP-A- 3 250 165
- JP-A- 4 157 234
- JP-A-63 297 837

## Description

### (Technical Field)

This invention relates to a vibration control device of an active type for reducing the response of a structure due to earthquake and wind or the like by applying a control force.

### (Background Art)

A dynamic damper (designated as DD thereafter) is available as a vibration control device of a passive type, and there are descriptions as application thereof to structures, e.g., JP-A-63-76932 and JP-A-3-38686.

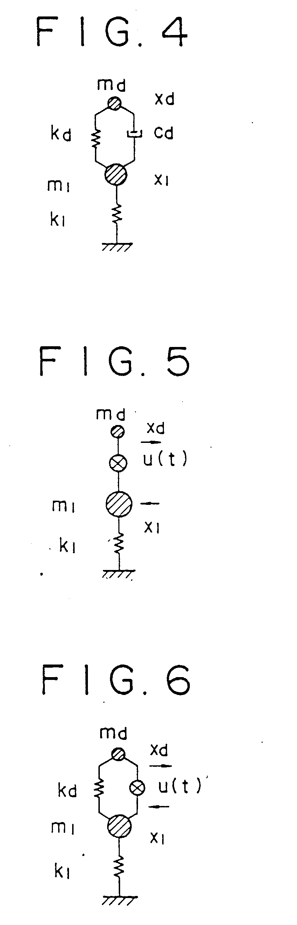

Fig. 4 shows a vibration model of a DD to be applied to a structure, wherein m₁ is a mass of a main body of a structure constituting a main vibration system and m_{d} is a mass of an additional mass body constituting a damping system. Also, k₁ is a spring constant of the main body of the structure, and the main body of the structure having a mass m₁ and the additional mass body having a mass m_{d} are mutually connected through a spring having a spring constant k_{d} and a damper having a damping coefficient c_{d}. Further, x₁ represents a displacement of the structure and x_{d} represents a displacement of a weight.

A natural angular frequency of the main vibration system is given by:${\text{ω}}_{\text{1}} {\text{= (k}}_{\text{1}} {\text{/m}}_{\text{1}} {\text{)}}^{\text{1/2}}$

In the DD, a mass m_{d} of the damping system is designed so that the ratio of the mass m_{d} to the mass m₁ of the main vibration system may be set to be or equal to:${\text{µ = m}}_{\text{d}} {\text{/m}}_{\text{1}} \text{≧ 0.01.}$

At this time, the natural angular frequency of the damping system is given by:${\text{ω}}_{\text{d}} {\text{= (1/1 + µ)ω}}_{\text{1}}$

A damping coefficient c_{d} and a damping factor h_{d} are respectively represented by:${\text{c}}_{\text{d}} {\text{= 2m}}_{\text{d}} {\text{ω}}_{\text{d}} {\text{h}}_{\text{d}}$${\text{h}}_{\text{d}} {\text{=[3µ/ 8 (1 + µ)]}}^{\text{1/2}}$

Further, there are some descriptions [designated as AMD (the abbreviation of Active Mass Driver)] as a vibration control device of an active type, e.g., US-A-.5,022,201 (JP-A- 1-275866 through 1-275869).

Fig. 5 shows a vibration model of an AMD, which applies a control force u(t) due to the hydraulic pressure or electromagnetic force or the like of an actuator on between a main body of the structure having a mass m₁ and an additional mass body having a mass m_{d} to actively control the vibration of the structure.

In the AMD, assuming that a spring between the main body of the structure and the additional mass body constituting a vibration control device is set under a soft condition, i.e.,${\text{ω}}_{\text{d}} {\text{≦ (1/2)ω}}_{\text{1}}$ the control force u(t) is given in the following equation:${\text{u(t) = G}}_{\text{1}} {\text{(dx}}_{\text{1}} {\text{/dt) + G}}_{\text{2}} {\text{(dx}}_{\text{d}} \text{/dt)}$ wherein G₁ is a gain in a circuit including an AGC circuit or the like against the response speed of the structure and attains the correspondences of large inputs through small inputs. Further, the second term in the above equation gives a damping property to the side of the additional mass body as well to attain a stability thereof by adding the product of a gain G₂ (negative sign) to a vibration speed on the side of the additional mass body to the control force.

In addition, with reference to the above-described AMD, some studies have been made which try to add a spring having a spring constant k_{d} in parallel with the control force due to the actuator as shown in the vibration model of Fig. 6 and to obtain a vibration control effect to the same degree with that of the AMD by means of a less control force in comparison with that of the AND [designated as ATMD (the abbreviation of Active Tuned Mass Damper) thereafter].

In case of an ATMD, a spring constant k_{d} is set so that the vibration of an additional mass body may synchronize with that of a structure, that is,${\text{ω}}_{\text{d}} {\text{= ω}}_{\text{1}}$ and the resulting control force u(t) is, for example, given by the following equation,${\text{u(t) = G}}_{\text{1}} {\text{(dx}}_{\text{1}} {\text{/dt) + G}}_{\text{2}} {\text{(dx}}_{\text{d}} {\text{/dt) + G}}_{\text{3}} {\text{(x}}_{\text{1}} {\text{- x}}_{\text{d}} \text{)}$ wherein G₃ is a gain having a negative sign and cancels a part of the inertial force applying on the additional mass body at a vibration time to the third term in the above equation so that the additional mass body may be vibrated by a less control force.

Furthermore, there is a disclosure in JP-A-3-70075 with reference to a form for controlling the vibration of a structure due to earthquake or the like by an extremely small control force by connecting a second additional mass body having a mass less than that of the additional mass body of DD to the additional mass body of DD through a spring and an actuator and applying a control force to the second additional mass body from the actuator, as it were, an active type vibration control device in a form of a double active damper.

A vibration control device of a type, in which a second additional mass body with a mass smaller than that of an additional mass body of DD is provided to the additional mass body of the DD, and the vibration of a structure is restrained by applying a control force to the second additional mass body from an actuator, is constituted so as to obtain a higher vibration control effect by a far smaller control force in comparison with a case of AMD or ATMD. However, it involves such problems as vibrations and noise produced by a driver or an additional mass body (or a second additional mass body), similar to a case of AMD and ATMD.

Further, the protection of a driver portion should be considered by reason of the maintenance or the like, and the installation space thereof or the like needs to be considered.

JP-A-63 297837 discloses a vibration control device according to the preamble of claim 1.

The present invention has attained the solution for the problems in the conventional vibration control device, and an object of the present invention is to provide a vibration control device with high reliability and safety, which can be operated by a smaller supply energy and control force, can effectively restrain the vibration of a structure against earthquake or the like, can prevent any noise and harmful vibration against the structure, and is excellent in the maintenance.

The present invention provides a vibration control device as set forth in claim 1.

A vibration control device of the present invention assumes an additional mass body in the basic constitution of the above-described DD as a first additional mass body, corresponds to what is added with a second additional mass body constituting the above-described AMD or ATMD to the first additional mass body and constitutes a double dynamic damper of an active type.

The first additional mass body having a predetermined mass mₐ is constituted by a structural body having a chamber formed in the inside and is supported by a support body having a predetermined spring constant kₐ and a predetermined damping coefficient cₐ such as high damping laminated rubber. Further, the first additional mass body is provided at the top portion or the other appropriate places of the structure.

The second additional mass body having a predetermined mass m_{b} is provided inside the first additional mass body, that is, inside the chamber formed in the first additional mass body, and constitutes a driver, which is movable relatively to the first additional mass body by a control force u(t).

A value of the spring constant kₐ of the support body is determined such that the vibration period of the first additional mass body is synchronized with the natural period of the structure. On the other hand, the damping coefficient cₐ of the support body is taken considerably larger than that in case of the DD, and the first additional mass body is vibrated by a force received from the driver. The support body is not always restricted to a high-damping laminated rubber, but in case of the high-damping laminated rubber, there is an advantage in that the spring constant kₐ to be a target and the high damping coefficient cₐ are easily obtained. Consequently, a variety of forms such as a combination between an air spring and a damping material and that between a normal laminated rubber for base isolation and an elastoplastic damper are possible other than the high-damping laminated rubber, so long as a predetermined spring capacity and damping capacity can be obtained.

The control force u(t) can be given in a form of electromagnetic force by a linear motor or the like and a hydraulic pressure by a hydraulic cylinder or the like, for example, and is controlled on the basis of the response of the structure due to a vibrational external force such as earthquake and wind or a seismic response analysis or the like.

### (Brief Description of the Drawings)

Fig. 1 is a vertical sectional view showing the outline of a vibration control device of the present invention;
Fig. 2 is a vibration model diagram of a vibration control device of the present invention;
Fig. 3 is a block diagram showing the partial constitution of a control circuit as an embodiment of the present invention;
Fig. 4 is a vibration model diagram of a prior art DD as a comparative;
Fig. 5 is a vibration model diagram of a prior art AMD as a comparative; and
Fig. 6 is a vibration model diagram of an ATMD as a comparative.

### (The Best Mode for Embodying the Invention)

Next will be described an illustrated embodiment.

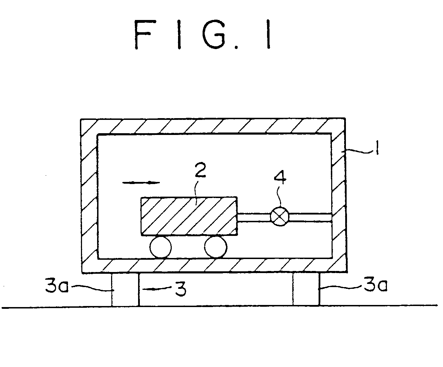

Fig. 1 shows a structure of a vibration control device as an embodiment of the present invention.

A structural body 1 as a first additional mass body constituting the vibration control device has a chamber formed therein, and a driver 2 as a second additional mass body and an actuator 4 are provided inside the structural body 1.

The first additional mass body is constituted by the structural body 1 formed of concrete and steel or the like and having a chamber formed therein, and is supported on a predetermined installed floor surface, such as a roof of a building, by a support body 3 composed of a plurality of distributively placed high-damping laminated rubbers 3a.

The driver 2 as the second additional mass body and the actuator 4 are provided inside the chamber of the structural body 1, and the driver 2 travels on the floor surface of the structural body 1. Further, a frictional force on the travel surface is set as small as possible.

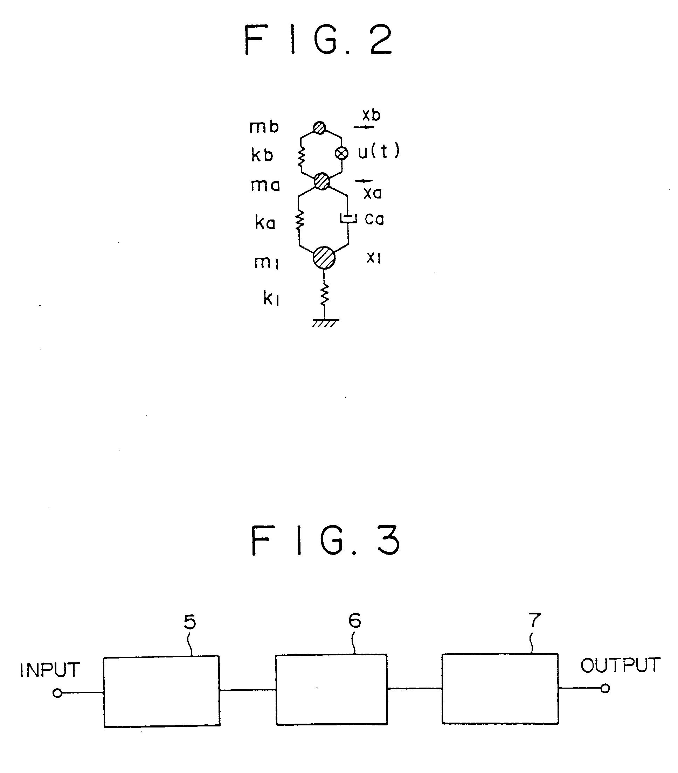

Fig. 2 shows the vibration control device of the present invention as a vibration model, which corresponds to what is connected the structural body 1 as the first additional mass body and the driver 2 as the second additional mass body to each other through a spring with a predetermined spring constant k_{b} in the embodiment of Fig. 1. Namely, the embodiment of Fig. 1 shows a combination of DD and AMD, whereas the model of Fig. 2 shows a combination of DD and ATMD.

In the figure, m₁ represents the mass of a structure constituting a main vibration system, mₐ represents the mass of the first additional mass body and m_{b} represents the mass of the second additional mass body, respectively. In addition, k₁ is a spring constant to the main body of the structure, k₂ is a spring constant of the support body, cₐ is a damping coefficient of the support body, k_{b} is a spring constant between the first additional mass body and the second additional mass body provided inside the first additional mass body, and u(t) is a control force, respectively. Further, x₁ represents a displacement of the structure, xₐ represents a displacement of the first additional mass body, and x_{b} represents a displacement of the second additional mass body, respectively.

In case where a large-size structure, such as a multi-story building or a super multi-story building is subjected to vibration control, the mass of the first additional mass body is equal to, e.g., approximately 1/500 through 1/1000 of the mass of the structure. However, the mass in this case is considered including the mass of the second additional mass body and that of the actuator, which are provided in the first additional mass body. Further, the mass of the second additional mass body is arranged as, e.g., 1/20 through 1/100 of the mass of the first additional mass body.

As for a specific numerical embodiment, in case where the total weight of a structure is 100,000 tons, such a design as the first additional mass body having approximately 100 tons and the second additional mass body having approximately 5 tons may be considered.

By using the parameters in Fig. 2, angular frequencies ω₁, ωₐ and ω_{b} of the main vibration system, the first additional mass body and the second additional mass body, respectively, are represented by:${\text{ω}}_{\text{1}} {\text{= (k}}_{\text{1}} {\text{/m}}_{\text{1}} {\text{)}}^{\text{1/2}}$${\text{ω}}_{\text{a}} {\text{= (k}}_{\text{a}} {\text{/m}}_{\text{a}} {\text{)}}^{\text{1/2}}$${\text{ω}}_{\text{b}} {\text{= (k}}_{\text{b}} {\text{/m}}_{\text{b}} {\text{)}}^{\text{1/2}}$

Then, by synchronizing these angular frequencies, the relation of the following equation is established.${\text{ω}}_{\text{1}} {\text{≒ ω}}_{\text{a}} {\text{≒ ω}}_{\text{b}}$

Further, a relationship of the mass of the structure, that of the first additional mass body and that of the second additional mass body as described above can be represented by:${\text{m}}_{\text{a}} {\text{/m}}_{\text{1}} \text{= 1/500 through 1/1000}$${\text{m}}_{\text{b}} {\text{/m}}_{\text{a}} \text{= 1/10 through 1/100}$

Furthermore, a damping coefficient cₐ of the support body against the first additional mass body can be represented by:${\text{c}}_{\text{a}} {\text{= 2m}}_{\text{a}} {\text{ω}}_{\text{a}} {\text{h}}_{\text{a}}$

In the above equation, hₐ is a damping factor of the support body and a large damping factor of as much as hₐ = 10 through 50% is used in the design of the support body from the reason which will be described later.

The control force for controlling the motion of the driver as the second additional mass body is defined by the following equation:${\text{u(t) = G}}_{\text{1}} {\text{(d}}^{\text{2}} {\text{x}}_{\text{1}} {\text{/dt}}^{\text{2}} {\text{) + G}}_{\text{2}} {\text{(dx}}_{\text{b}} {\text{/dt) + G}}_{\text{3}} {\text{(x}}_{\text{b}} {\text{- x}}_{\text{a}} \text{)}$ wherein G₁, G₂ or G₃ is a gain in each term of the above equation (1).

Energy is mainly exhausted by the damper function (damping coefficient cₐ) of the support body.

Since the angular frequency ωₐ of the first additional mass body is in synchronization with the angular frequency ω₁ of the main vibration system, a dynamic damper is formed. However, the damping coefficient cₐ is enlarged enough more than the optimum design value. No dynamic damper normally acts in this state.

Then, when the control force u(t) is applied and the first additional mass body (mass mₐ) is vibrated, the first additional mass body (mass mₐ) moves far larger than the normal DD (Dynamic Damper), and therefore, the vibration control effect is increased.

Even in case where the response acceleration of the structure constituting the main vibration system is small, the gain G₁ in the first term of the above equation (1) has a function for giving a control force in a form of amplifying the response acceleration, and as a result, the vibration control effect can be increased.

The reaction force of the control force u(t) is treated by using the inertia force of the second additional mass body (mass m_{b} = 1/10mₐ through 1/100mₐ).

The second term in the above equation (1) is a term for affording a damping property to the driver 1 by using a relation between the action and the reaction, and therefore, the stability of the vibration of the second additional mass body can be attained. In a state for causing to synchronize the angular frequency ωₐ of the second additional mass body with the angular frequency ω₁ of the main vibration system, the gain G₂ can be represented by:${\text{G}}_{\text{2}} {\text{= 2m}}_{\text{b}} {\text{ω}}_{\text{1}} \text{h}$ and also be set so that the damping coefficient h may become within the range of 0.1 through 0.2 (10% through 20%).

Additionally, by making use of the principle of the ATMD described above, the angular frequency ω_{b} of the second additional mass body is kept synchronized with the angular frequency ω₁ of the main vibration system. Then, since the spring force (spring constant k_{b}) absorbs the most of the force required for the control, the necessary force for the control is further lessened.

In other words, the control force u(t), the inertia force [m_{b}(dx_{b}/dt)²] and the spring force [k_{b}(x_{b} - xₐ)]act on the second additional mass body, and the following relation is given by:$\text{(control force) + (inertia force) + (spring force) = 0}$

Since the inertia force and the spring force almost cancel with each other in the above equation, the control force becomes extremely small.

In this case, a synchronizing angular frequency ω_{b}'(=[(k_{b} + G₃)/m_{b}]^{1/2}) created by the gain G₃ (negative value, e.g., approximately -k_{b} x 0.9 or -k_{b} x 0.8 being chosen) in the third term of the above equation (1), is set so as to be not more than a half of the angular frequency ω_{b} of the second additional mass body.

As a result, a synchronization is created to the period component of, e.g., approximately 16 seconds (in case of G₃ = -k_{b} x 0.9), in addition to the period component of 5 seconds of the response acceleration of a structure to be used as an input, and it is necessary to provide an appropriate filter to the gain G₁ so as to reduce the control force.

The filter examined by the control of the conventional ATMD is such as a high-pass filter, but since a normal high-pass filter has a large out-of-phase, it is the case that a cut-off frequency has to be considerably apart and that any sufficient effect has not been obtained. Therefore, any devices are required for a filter having a sharp characteristic without any out-of-phase.

Fig. 3 is a block diagram showing a part of a control circuit as an embodiment of the present invention and corresponds to the first term in the above equation (1).

Any inputs are the response acceleration of the structure by earthquake, wind or the like and amplified by a circuit composed of a filter circuit 5, an AGC circuit 6 and a limiter circuit 7. In addition, Fig. 3 shows a simplified state of these circuits, and the filter circuit 5 or the like may be used by overlapping in plural numbers.

There is no out-of-phase in the neighborhood of an objective vibration frequency in the filter circuit 5. The filter circuit 5 has a sharp characteristic and a transfer characteristic thereof is given by, e.g., the following Laplace function.${\text{H(s) = (s}}^{\text{2}} {\text{+ 2G}}_{\text{1}} {\text{ξ}}_{\text{n}} {\text{ω}}_{\text{n}} {\text{s + ω}}_{\text{n}} {}^{\text{2}} {\text{)/(s}}^{\text{2}} {\text{+ 2ξ}}_{\text{n}} {\text{ω}}_{\text{n}} {\text{s + ω}}_{\text{n}} {}^{\text{2}} \text{)}$

The output multiplied by Gain G (e.g., a value multiplied by about 20) is obtained thereby at the objective angular frequency ωₙ (corresponding to a primary angular frequency of the structure), and there is no out-of-phase at this angular frequency. ξₙ is a damping factor and takes a value, e.g., within the range of 0.2 through 0.5 (20% through 50%). Likewise, the out-of-phase is not created even in high and low frequency ranges but only created before or after the objective angular frequency. By the use of this filter, the control displacement and the control force required for the above control method are remarkably reduced.

The AGC circuit 6 is normally used for audio circuits or the like. However, by adopting this circuit, the vibrations ranging from a large input to a small input can be handled, and the vibration control effect can be enhanced.

However, since the AGC circuit 6 alters the amplification factor while the AGC circuit is accompanied by a time delay to some extent, the output is restricted by the limiter circuit 7, so as to prevent any excessive output signal from generating in particular for the early stage of vibration.

The control force for controlling the action of the driver as the second additional mass body is not always restricted to the above equation (1), and the control force can also be defined by, e.g., the following equation,${\text{u(t) = G}}_{\text{1}} {\text{'(dx}}_{\text{1}} {\text{/dt) + G}}_{\text{2}} {\text{'(x}}_{\text{a}} {\text{-x}}_{\text{1}} {\text{) + G}}_{\text{3}} {\text{'(dx}}_{\text{b}} \text{/dt)} {\text{+ G}}_{\text{4}} {\text{'(x}}_{\text{b}} {\text{-x}}_{\text{a}} \text{)}$ wherein G₁', G₂', G₃' or G₄' is a gain in each term of the above equation (3).

In case of the above equation (3), the speed (dx₁/dt) of the structure is fed back.

The control described above is applied to any highly frequent earthquake or strong wind. For a larger earthquake over the performance of the device, such a structure as stops the drive of the second additional mass body might also be possible for preventing the damage of the device. Even in this case, the structure may be allowed to function as a passive type dynamic damper, and a vibration control effect as a dynamic damper can be obtained.

### (Possibility of Industrial Utilization)

By installing the vibration control device of the present invention to a structure, the following advantages and effects will be obtained.
① A large vibration control effect due to the drive of an extremely small mass body can be obtained by setting a DD as a basic structure, and adding the constitution of an AMD or an ATMD having a driver to this basic structure.
② Since the first additional mass body is formed with a chamber and the driver is accommodated in the chamber, any noise produced by the driver is hard to be heard outside, and any harmful vibration is shut off by a support body and is hard to be transmitted to a structure.
③ Since a drive mechanism such as the driver and the actuator is protected by a structural body as the first additional mass body, the device can be entirely installed on the roof or the like of a building.
④ In view of the following points; the driver can be installed inside the first additional mass body, the main body of the vibration control device is supported by a support body with a high damping performance, and the mass of the driver is very small in comparison with that of the structure, any possible influence on the main body of the structure is extremely small, even though any running-away might happen at the driving portion.

## Claims

1. A vibration control device for a structure, comprising: a first additional mass body (1) with a predetermined mass mₐ, a support body (3) for supporting the first additional mass body (1), and a driver with a predetermined mass m_{b} as a second additional mass body (2), which is movably mounted in a chamber inside said first additional mass body (1), characterised in that said second additional mass body (2) is movable relatively to said first additional mass body (1) by a control force u(t) acting between said first additional mass body (1) and said second additional mass body (2), and said support body (3) has a spring constant kₐ for giving a predetermined period corresponding to the natural period of the structure to said first additional mass body (1) and has a predetermined damping coefficient cₐ.

2. A vibration control device according to claim 1, wherein said drive (2) is connected to said first additional mass body (1) through a spring having a predetermined spring constant k_{b}.

3. A vibration control device according to claim 2, wherein the mass of said first additional mass body (1) is 1/500 to 1/1000 of the mass of the structure.

4. A vibration control device according to any preceding claim, wherein the mass of said driver (2) is 1/20 to 1/100 of the mass of said first additional mass body (1).

5. A vibration control device according to any preceding claim, wherein said support body (3) is a plurality of distributively placed high-damping laminated rubbers (3a).

## Patentansprüche

1. Schwingungskontrollvorrichtung für ein Bauwerk, das aufweist: einen ersten zusätzlichen Massekörper (1) mit einer vorgegebenen Masse mₐ; einen Stützkörper (3) für das Stützen des ersten zusätzlichen Massekörpers (1); und eine Antriebsvorrichtung mit einer vorgegebenen Masse m_{b} als ein zweiter zusätzlicher Massekörper (2), der beweglich in einer Kammer innerhalb des ersten zusätzlichen Massekörpers (1) montiert ist, dadurch gekennzeichnet, daß der zweite zusätzliche Massekörper (2) relativ zum ersten zusätzlichen Massekörper (1) mittels einer Kontrollkraft u(t) beweglich ist, die zwischen dem ersten zusätzlichen Massekörper (1) und dem zweiten zusätzlichen Massekörper (2) wirkt, und daß der Stützkörper (3) eine Federkonstante kₐ, um eine vorgegebene Schwingungsdauer entsprechend der Eigenschwingungsdauer des Bauwerkes dem ersten zusätzlichen Massekörper (1) zu verleihen, und einen vorgegebenen Dämpfungskoeffizienten cₐ aufweist.

2. Schwingungskontrollvorrichtung nach Anspruch 1, bei der die Antriebsvorrichtung (2) mit dem ersten zusätzlichen Massekörper (1) durch eine Feder mit einer vorgegebenen Federkonstante k_{b} verbunden ist.

3. Schwingungskontrollvorrichtung nach Anspruch 2, bei der die Masse des ersten zusätzlichen Massekörpers (1) 1/500 bis 1/1000 der Masse des Bauwerkes beträgt.

4. Schwingungskontrollvorrichtung nach einem der vorhergehenden Ansprüche, bei der die Masse der Antriebsvorrichtung (2) 1/20 bis 1/100 der Masse des ersten zusätzlichen Massekörpers (1) beträgt.

5. Schwingungskontrollvorrichtung nach einem der vorhergehenden Ansprüche, bei der der Stützkörper (3) aus einer Vielzahl von verteilt angeordneten stark dämpfenden Schichtgummis (3a) besteht.

## Revendications

1. Dispositif de contrôle des vibrations pour une structure, comprenant: un premier corps de masse ajoutée (1) ayant une masse prédéterminée mₐ, un corps de support (3) pour supporter le premier corps de masse ajoutée (1) et un dispositif d'entraînement avec une masse prédéterminée m_{b} formant un deuxième corps de masse ajoutée (2), qui est monté avec possibilité de déplacement dans une chambre à l'intérieur dudit premier corps de masse ajoutée (1), caractérisé en ce que le deuxième corps de masse ajoutée (2) peut se déplacer par rapport au premier corps de masse ajoutée (1) sous l'effet d'une force de commande u(t) agissant entre ledit premier corps de masse ajoutée (1) et le deuxième corps de masse ajoutée (2) et ledit corps de support (3) a une constante de rappel kₐ pour obtenir une période prédéterminée correspondant à la période naturelle de la structure pour ledit premier corps de masse ajoutée (1) et il a un coefficient d'amortissement prédéterminé cₐ.

2. Dispositif de contrôle des vibrations selon la revendication 1, dans lequel ledit dispositif d'entraînement (2) est connecté au premier corps de masse ajoutée (1) par un ressort ayant une constante de rappel prédéterminée k_{b}.

3. Dispositif de contrôle des vibrations selon la revendication 2, dans lequel la masse dudit premier corps de masse ajoutée (1) est comprise entre 1/500 et 1/1000 de la masse de la structure.

4. Dispositif de contrôle des vibrations selon l'une quelconque des revendications précédentes, dans lequel la masse dudit dispositif d'entraînement (2) est comprise entre 1/20 et 1/100 de la masse dudit premier corps de masse ajoutée (1).

5. Dispositif de contrôle des vibrations selon l'une quelconque des revendications précédentes, dans lequel corps de support (3) est constitué de plusieurs stratifiés en caoutchouc (3a) à fort amortissement et disposés de manière répartie.
